# EUROPÄISCHE PATENTSCHRIFT

(11) **EP 1 601 804 B1**
(45) Veröffentlichungstag und Bekanntmachung des Hinweises auf die Patenterteilung: **20.11.2013**
(21) Anmeldenummer: 04718262.1
(22) Anmeldetag: 08.03.2004
(51) Int. Cl.: C22C 38/18

(54) **VERWENDUNG EINER EISEN-CHROM-ALUMINIUM-LEGIERUNG**
USE OF AN IRON-CHROMIUM-ALUMINUM ALLOY
UTILISATION D'UN ALLIAGE FER-CHROME-ALUMINIUM

(30) Priorität: 11.03.2003 DE 10310865
(43) Veröffentlichungstag der Anmeldung: 07.12.2005
(73) Patentinhaber: Outokumpu VDM GmbH, 58791 Werdohl (DE)
(72) Erfinder: HATTENDORF, Heike, 58791 Werdohl (DE); KOLB-TELIEPS, Angelika, 58511 Lüdenscheid (DE); HOJDA, Ralf, 58762 Altena (DE)
(86) Internationale Anmeldenummer: PCT/DE2004/000454
(87) Internationale Veröffentlichungsnummer: WO 2004/081247

(56) Entgegenhaltungen:
- WO-A-01/54899
- DE-A- 19 834 552
- US-A- 4 414 023

## Beschreibung

Die Erfindung betrifft die Verwendung eine Eisen-Chrom-Aluminium-Legierung mit guter Oxidationsbeständigkeit.

Ist der Katalysator im Viertakt-Motor heute die Regel, so steht die Entwicklung von Katalysatoren für Diesel- und Zweitakt-Motoren noch an ihren Anfängen. Im Viertakt-Motor werden Legierungen eingesetzt, die ähnlich der in der EP-A 0387 670 beschriebenen sind: mit (in Masse-%) 20 - 25% Cr, 5 - 8 % Al, max. 0,01 % P, max. 0,01 % Mg, max. 0,5 % Mn, max. 0,005 % S, Rest Eisen und unvermeidbare Verunreinigungen sowie gegebenenfalls Legierungselemente, wie 0,03 - 0,08 % Y, 0,004 - 0,008 % N, 0,02 - 0,04 % C, 0,035 - 0,07 % Ti, 0,035 - 0,07 % Zr. Da die Herstellung mit traditionellen Verfahren, nämlich dem konventionellen Gießen der Legierung und dem anschließenden Warm- und Kaltverformen, bei Aluminiumgehalten unter 6 Masse% sehr schwierig und mit höheren Aluminiumgehalten in großtechnischem Maßstab nicht mehr beherrschbar ist, wurden alternative Herstellungsverfahren entwickelt.

So beschreibt die US-PS 5,366,139 beispielsweise ein Verfahren, bei welchem Folien aus Eisen-Chrom-Aluminium-Legierungen dadurch hergestellt werden, dass ein geeigneter Eisen-Chrom-Stahl durch Walzplattieren mit Aluminium oder Aluminiumlegierungen beidseitig beschichtet wird. Dieser Verbund wird ausschließlich kaltgewalzt und schließlich so diffusionsgeglüht, dass ein homogenes Gefüge entsteht.

Die US 4,414,023 offenbart eine Fe-Cr-Al-Legierung mit folgender Zusammensetzung: 3,0 bis 8,0 % Al, 8,0 bis 25,0 % Cr, mindestens 0,002 bis 0,05 % eines der Elemente aus der Gruppe Ce, La, Nd, Pr, Seltene Erden, maximal 0,006 %, Si max. 4,0 %, Mn 0,06 bis 1,0 % und die üblichen herstellungsbedingten Verunreinigungen. Diese Legierung kann in Form von Folien oder Drähten als Katalysatormaterial oder als Heizleiter bzw. elektrische Widerstandselemente eingesetzt werden.

In der WO 01/54899 A1 wird eine Fe-Cr-Al-Legierung mit folgender Zusammensetzung beschrieben: 2 bis 6 % Al, 16 bis 25 % Cr, 0,1 bis 3 % Si, max. 0,5 % Mn, 0,01 bis 0,3 % Zr und/oder 0,01 bis 0,1 % Selten Erdmetall und/oder Y, Hf, Ti, max. 0,01 % Mg, max. 0,1 % Ca, Rest Fe und übliche Verunreinigungen. Diese Legierung kann in Form von Folien als Trägerkörper für Fahrzeugkatalysatoren oder als Heizelement für Kochplatten eingesetzt werden.

Ein anderer Weg, bei dem die Beschichtung über Feueraluminieren aufgebracht wird, ist in der DE-A 198 34 552 beschrieben. Letztere Folie hat die folgende chemische Zusammensetzung (alle Angaben in Masse%): 18 - 25 % Cr, 4 - 10 % Al, 0,03 - 0,08 % Y, max. 0,01 % Ti, 0,01 - 0,05 % Zr, 0,01 - 0,05 % Hf, 0,5- 1,5 % Si, Rest Eisen und verfahrensbedingte Verunreinigungen. Bisher wurden aus dieser Legierung hergestellte Folien in Viertakt-Verbrennungsmotoren eingesetzt.

Der Erfindung liegt nun die Aufgabe zugrunde, eine Legierung für Anwendungen im Temperaturbereich von 250°C bis 1000°C mit einer ausreichenden Oxidationsbeständigkeit zur Verfügung zu stellen, die auch im großtechnischen Maßstab gut darstellbar ist.

Diese Aufgabe wird gelöst durch die Verwendung einer Eisen-Chrom-Aluminium-Legierung mit guter Oxidationsbeständigkeit bei der Halbzeuge nach Erschmelzung der Legierung über Block- bzw. Strangguss oder Bandguss sowie Warm- und Kaltumformen mit bedarfsweise erforderlicher(en) Zwischenglühung(en) erzeugt werden, mit (in Masse-%) 2,5 bis 4,5 % Al, 14 bis 19 % Cr und 0,05 - max. 0,6 % Si sowie Zugaben von > 0,01 bis 0,1 % Y und > 0,01 bis 0,1 % Hf und > 0,01 bis 0,2 % Zr sowie herstellungsbedingten Verunreinigungen, für ausschließlich im Temperaturbereich von 250° C bis 1000° C einsetzbare Komponenten in Dieselfahrzeugen und Zweitaktgeräten, insbesondere in Diesel- und Zweitaktmotoren.

Überraschenderweise hat sich im Falle von Diesel- und Zweitakt-Motoren gezeigt, dass Aluminiumgehalte über 5 % nicht nötig sind. 2,5 - 5,0 Masse % sind durchaus ausreichend, um in dem hier interessanten Temperaturbereich von 250°C bis 1000°C eine ausreichende Oxidationsbeständigkeit zu gewährleisten, wie die unten dargestellten Beispiele zeigen. Unerläßlich sind dabei die Zugaben reaktiver Elemente zur Gewährleistung der Oxidationsbeständigkeit. Besonders bewährt haben sich 0,01 - 0,1 % Y und/oder 0,01 - 0,1 % Hf, wobei bei Vorhandensein beider Elemente die Summe dieser beiden Elemente 0,15 Masse % nicht überschreiten darf, weil sich dann der positive Effekt der Oxidationsbeständigkeit in sein Gegenteil umkehrt. Aber auch durch Zusätze von anderen sauerstoffaffinen reaktiven Elementen, wie z.B. Zr, Ce MM und La können positive Effekte in Bezug auf die Oxidationsbeständigkeit der Legierung erreicht werden.

Ein mögliches Verfahren zur Herstellung von Halbzeugen aus dieser Legierung ist dadurch gekennzeichnet, dass die Halbzeuge nach Erschmelzung der Legierung über Block- bzw. Strangguß sowie Warm- und Kaltumformen mit bedarfsweise erforderlicher(en) Zwischenglühung(en) erzeugt werden.

Die Herstellung einer Folie von 50 µm oder sogar 20 µm Dicke ist bei dieser Zusammensetzung auf konventionelle Weise problemlos möglich. Die Brammen können sogar über den besonders kostengünstigen Stranggußweg produziert werden, der bei höheren Aluminiumgehalten in der Regel mit hohen Ausfällen verbunden ist.

Bevorzugte Anwendungsfälle der Legierung sind:
- Komponenten in Abgassystemen von Schiffsdiesel-, Diesel- und Zweitakt-Motoren eines Kraftfahrzeuges (PKW, LKW) oder Motorrades;
- Trägerfolien in metallischen Abgaskatalysatoren von Diesel- und Zweitakt-Motoren;
- Bauelemente in Dieselmotor-Glühkerzen.
- Drahtgestricke und Fließe für Abgasreinigungssysteme von z.B. Motorrädern, Motorsensen, Rasenmähern und Motorsägen.
- Bauteile für Abgasreinigungssysteme von Brennstoffzellen.
- Spritzdrähte für Oberflächenbeschichtungen von in Abgassystemen von Diesel- und Zweitaktsystemen eingesetzten Bauteilen.
- Heizleiter oder Widerstandswerkstoffe zur elektrischen Vorheizung von Abgasreinigungssystemen in Diesel- und Zweitaktsystemen.

Der Erfindungsgegenstand wird durch die nachfolgenden Beispiele näher erläutert:

(Die Beispiele Aluchrom ISE, Hf3 und Hf4 stellen Vergleichslegierungen und die Beispiele Aluchrom Hf1 und Hf2 die Verwendung des Erfindungsgegenstands dar)

**Chemische Zusammensetzungen**

| Element / Masse % | Aluchrom ISE | Aluchrom Hf 1 | Aluchrom Hf 2 | Aluchrom Hf 3 | Aluchrom Hf4 |
|---|---|---|---|---|---|
| Cr | 20,45 | 17,25 | 18,20 | 21,05 | 20,15 |
| Ni | 0,19 | 0,14 | 0,16 | 0,17 | 0,16 |
| Mn | 0,25 | 0,28 | 0,15 | 0,11 | 0,21 |
| Si | 0,43 | 0,54 | 0,29 | 0,30 | 0,22 |
| Ti | 0,01 | <0,01 | <0,01 | <0,01 | 0,01 |
| Cu | 0,03 | 0,05 | 0,02 | 0,03 | 0,07 |
| S | 0,002 | 0,002 | 0,002 | 0,002 | 0,002 |
| P | 0,011 | 0,009 | 0,013 | 0,009 | 0,012 |
| Al | 5,27 | 2,78 | 3,30 | 5,36 | 5,70 |
| Mg | 0,008 | 0,004 | 0,009 | 0,009 | 0,009 |
| Zr | 0,003 | 0,05 | 0,01 | 0,02 | 0,05 |
| V | 0,04 | 0,05 | 0,03 | 0,04 | 0,03 |
| C | 0,006 | 0,032 | 0,023 | 0,051 | 0,023 |
| N | 0,004 | 0,005 | 0,004 | 0,002 | 0,005 |
| Hf | --- | 0,04 | 0,05 | 0,03 | 0,05 |
| Y | --- | 0,03 | 0,05 | <0,01 | 0,06 |
| Cer MM (Ce, La, Nd) | 0,015 | --- | --- | --- | |

Die der Verwendung des Erfindungsgegenstandes zugrunde liegenden Beispiele wurden im Lichtbogenofen erschmolzen, als Strang- oder als Blockguß vergossen, warmgewalzt bis zu einer Dicke von rund 3 mm und mit Zwischenglühungen an Enddicken von 0,02 bis 0,05mm auf einem 20-Rollen-Gerüst kaltgewalzt.

### Oxidationstest

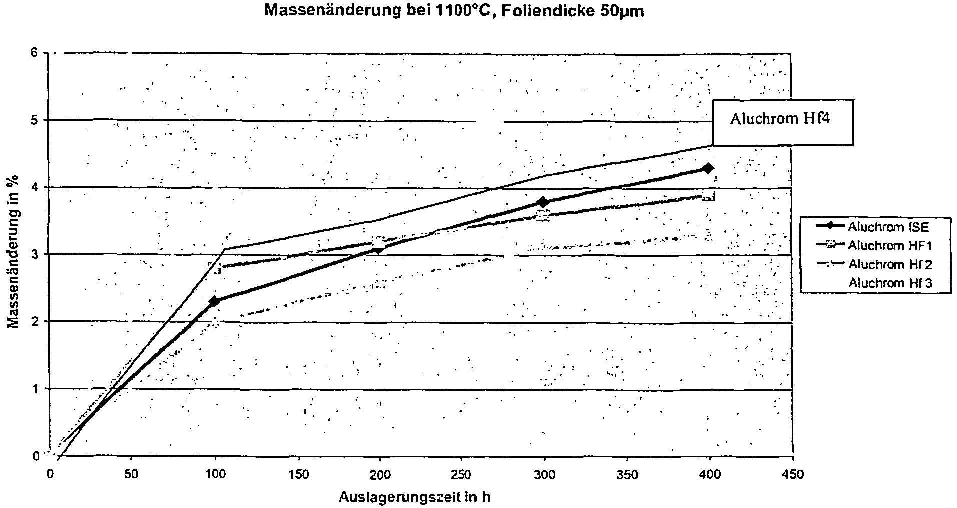

Wie die aufgeführten Beispiele zeigen, ist neben dem Al-Gehalt vor allem die genaue Abstimmung der sauerstoffaffinen, reaktiven Elemente von zentraler Bedeutung, so zeigen beispielsweise die erfindungsgemäßen Legierungen Aluchrom Hf1 und Aluchrom Hf2 trotz der vergleichsweise niedrigen Al-Gehalte von rd. 3% eine überaus gute Oxidationsbeständigkeit, die den Vergleichslegierungen Aluchrom ISE und Aluchrom Hf4 ähnlich ist. Wohingegen Aluchrom Hf3 trotz des hohen Al-Gehaltes von 5,36% schlechtere Werte aufweist, was an dem zu geringen Y-Gehalt festgemacht werden kann. Hier bewirken demnach Zugaben von Y bzw. Ce MM eine deutliche Verbesserung der Oxidationsbeständigkeit. (siehe als Vergleich Aluchrom ISE und Aluchrom Hf4).

Ein weiterer wichtiger Aspekt für die Konstruktion von metallischen Katalysatorträgern für Diesel- und Zweitakt-Motoren stellt die Formbeständigkeit der Folie über die Laufzeit dar. Als entsprechendes Merkmal wird die Längenänderung betrachtet, die ein Maß von 4% möglichst nicht überschreiten sollte.

### Formstabilität

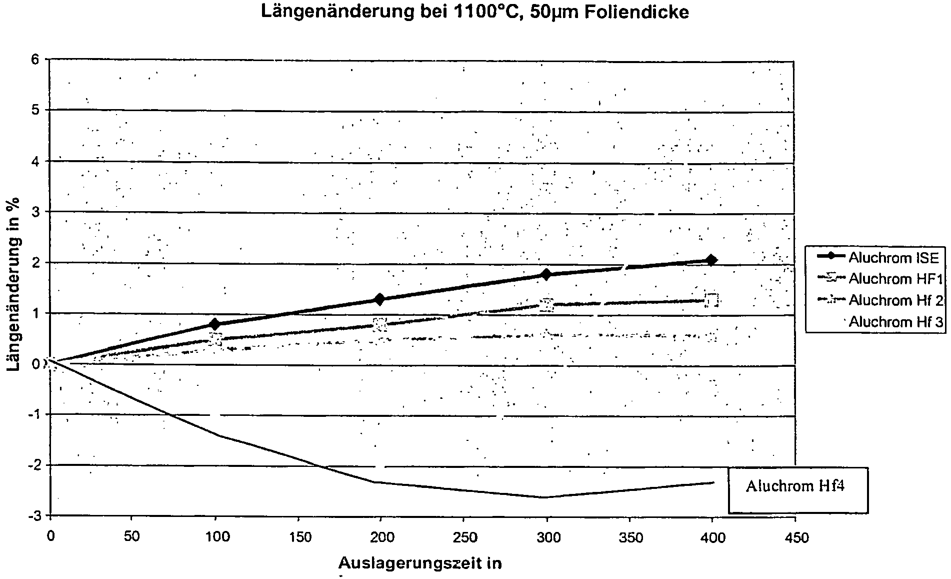

Auch hier zeigt sich, daß die erfindungsgemäßen Legierungen Alunchrom Hf1 und Aluchrom Hf2 mit einem Al-Gehalt von rd. 3% eine Formstabilität von <4% erreichen, ebenso wie die Vergleichslegierungen Aluchrom ISE und Aluchrom Hf4, die einen Al-Gehalt von > 5% haben. Auch in diesem Fall erreicht die Vergleichslegierungen Aluchrom Hf3 trotz vergleichsweise hohem Al-Gehalt von 5,36%, aber zu niedrigem Y-Gehalt, die Anforderungen nicht, da die Längenänderung nach 400h mit rd. 5% deutlich zu hoch liegt.

Damit zeigt sich überraschenderweise, dass bei geeigneter Abstimmung der sauerstoffaffinen, reaktiven Elemente selbst mit deutlich unter 5% liegenden Al-Gehalten eine für den Bau von metallischen Katalysatoren notwendige Formbeständigkeit erreicht werden kann.

Eine kostengünstige Produktion, bedingt durch die vergleichsweise geringen Al-Gehalte, über Block-, Strang- oder auch Bandguß bei Einhaltung der anwendungsspezifischen Parameter wird dadurch erreicht.

## Patentansprüche

1. Verwendung einer Eisen-Chrom-Aluminium-Legierung mit guter Oxidationsbeständigkeit bei der Halbzeuge nach Erschmelzung der Legierung über Block- bzw. Strangguss oder Bandguss sowie Warm- und Kaltumformen mit bedarfsweise erforderlicher(en) Zwischenglühung(en) erzeugt werden, mit (in Masse-%) 2,5 bis 4,5 % Al, 14 bis 19 % Cr und 0,05 - max. 0,6 % Si sowie Zugaben von > 0,01 bis 0,1 % Y und > 0,01 bis 0,1 % Hf und > 0,01 bis 0,2 % Zr, bedarfsweise max. 0,06 % C, max. 0,6 % Si, max. 0,6 % Mn, max. 0,04 % P, max. 0,01 % S, max. 0,02 % N, max. 0,1 % Ti und in Summe max. 0,5 % Nb, Mo, Cu und/oder W sowie herstellungsbedingten Verunreinigungen, für ausschließlich im Temperaturbereich von 250° C bis 1000° C einsetzbare Komponenten in Dieselfahrzeugen und Zweitaktgeräten, insbesondere in Diesel- und Zweitaktmotoren.

2. Verwendung nach Anspruch 1, **dadurch gekennzeichnet, dass** die Legierung als Trägerfolie in metallischen Abgaskatalysatoren einsetzbar ist.

3. Verwendung nach Anspruch 1 oder 2 als Komponente von Abgasreinigungssystemen, bei denen das Substrat aus Draht hergestellt wird.

4. Verwendung nach einem der Ansprüche 1 bis 3 als Bauelement in Dieselmotor-Glühzellen.

5. Verwendung nach einem der Ansprüche 1 bis 4 als Spritzdraht für Oberflächenbeschichtungen von in Abgassystemen von Diesel- oder Zweitaktmotoren eingesetzten Bauteilen.

6. Verwendung nach einem der Ansprüche 1 bis 5 als Heizleiter oder Widerstandswerkstoff zur elektrischen Vorheizung von Abgasreinigungssystemen von Diesel- oder Zweitaktmotoren.

7. Verwendung einer Legierung nach einem der Ansprüche 1 bis 6 als Bauteil in Abgasreinigungssystemen von Brennstoffzellen.

8. Verwendung nach einem der Ansprüche 1 bis 7, bei der aus der Legierung erzeugte Bauteile nach einer Glühung bei 1100°C über 400 h bei einer Metalldicke von 50 µm eine Längenänderung von < 4 % aufweisen.

## Claims

1. A use of an iron-chromium-aluminum alloy having a high oxidation resistance, in which semi-finished products are produced after melting of the alloy by means of ingot or continuous casting or strip casting as well as warm and cold forming with optionally required intermediate annealing(s), comprising (in % by mass) 2.5 to 4.5 % Al, 14 to 19 % Cr and 0.05 to maximum 0.6 % Si as well as additions of > 0.01 to 0.1 % Y and > 0.01 to 0.1 % Hf and > 0.01 to 0.2 % Zr, if necessary maximum 0.06 % C, maximum 0.6 % Si, maximum 0.6 % Mn, maximum 0.04 % P, maximum 0.01 % S, maximum 0.02 % N, maximum 0.1 % Ti and in total maximum 0.5 % Nb, Mo, Cu and/or W as well as production related impurities, for components of diesel vehicles and two-stroke devices, in particular in diesel and two-stroke engines, which components are exclusively adapted for the use in the temperature range comprised between 250°C and 1000°C.

2. A use according to claim 1, **characterized in that** the alloy can be used as carrier foil in metallic exhaust gas catalysts.

3. A use according to claim 1 or 2 as component of exhaust gas purification systems, in which the substrate is made of wire.

4. A use according to one of the claims 1 through 3 as structural element in diesel engine heater plugs.

5. A use according to one of the claims 1 through 4 as spray wire for the surface coating of components used in exhaust gas systems of diesel or two-stroke engines.

6. A use according to one of the claims 1 through 5 as heat conductor or resistance material for the electric pre-heating of exhaust gas purification systems of diesel or two-stroke engines.

7. A use of an alloy according to one of the claims 1 through 6 as component in exhaust gas purification systems of fuel cells.

8. A use according to one of the claims 1 through7, in which components made of the alloy and having a metal thickness of 50 µm will comprise a change in length of < 4% after an annealing at 1100°C during 400 h.

## Revendications

1. Utilisation d'un alliage fer-chrome-aluminium ayant une bonne stabilité à l'oxydation, pendant laquelle on produit des produits semi-finis après l'élaboration de l'alliage par moyen de la coulée en lingots ou la coulée continue ou la coulée en bande ainsi que par le formage à chaud et à froid avec, en cas de besoin, du/des recuit(s) intermédiaire(s), comprenant (en % en poids) 2,5 à 4,5 % de Al, 14 à 19 % de Cr et 0,05 à max. 0,6 % de Si ainsi que des additions de > 0,01 à 0,1 de Y et de > 0,01 à 0,1 % de Hf et de > 0,01 à 0,2 % de Zr, en cas de besoin max. 0,06 % de C, max. 0,6 % de Si, max. 0,6 % de Mn, max. 0,04 % de P, max. 0,01 % de S, max. 0,02 % de N, max. 0,1 % de Ti et en somme max. 0,5 % de Nb, de Mo, de Cu et/ou de W ainsi que des impuretés résultant de l'élaboration, pour des composants utilisables dans des véhicules diesel et des dispositifs à deux temps, notamment dans des moteurs diesel et deux temps, lesquels composants sont exclusivement utilisables dans la gamme de température comprise entre 250°C et 1000°C.

2. Utilisation selon la revendication 1, **caractérisé en ce que** l'alliage est utilisable en tant que feuille de support dans des catalyseurs de gaz d'échappement métalliques.

3. Utilisation selon la revendication 1 ou la revendication 2, en tant que composant des systèmes de purification de gaz d'échappement, dans lesquels le substrat est fabriqué en fil de fer.

4. Utilisation selon l'une des revendications 1 à 3, en tant que composant dans des bougies de préchauffage de moteur diesel.

5. Utilisation selon l'une des revendications 1 à 4, en tant que fil à projection pour des revêtements de surface des composants utilisés dans des systèmes de gaz d'échappement des moteurs diesel ou deux temps.

6. Utilisation selon l'une des revendications 1 à 5, en tant que conducteur chauffant ou matière de résistance pour le préchauffage électrique des systèmes de purification de gaz d'échappement des moteurs diesel ou deux temps.

7. Utilisation d'un alliage selon l'une des revendications 1 à 6 en tant que composant dans des systèmes de purification de gaz d'échappement des piles à combustible.

8. Utilisation selon l'une des revendications 1 à 7, dans laquelle des composants fabriqués en l'alliage et ayant une épaisseur de métal de 50 µm présenteront un changement de longueur de < 4 % après un recuit à 1100 °C pendant 400 h.
